# EUROPÄISCHE PATENTANMELDUNG

(11) **EP 1 985 450 A2**
(43) Veröffentlichungstag der Anmeldung: **29.10.2008**
(21) Anmeldenummer: 08007942.9
(22) Anmeldetag: 24.04.2008
(51) Int. Cl.: B41F 33/00

(54) **Softproofsystem einer Druckmaschine**

(30) Priorität: 28.04.2007 DE 102007020208
(71) Anmelder: manroland AG, 63075 Offenbach (DE)
(72) Erfinder: Altthaler, Karl, 86165 Augsburg (DE)
(74) Vertreter: Ulrich, Thomas

(57) **Zusammenfassung**

Die Erfindung betrifft ein Softproofsystem einer Druckmaschine, mit einer Aufnahme (11) zur Ablage eines in einem Druckprozess gedruckten Druckexemplars (12), und mit einem farbverbirtdlichen Monitor (14) zur Visualisierung eines als farbliche Referenz für das Druckexemplar dienenden Softproof, Erfindungsgemäß sind das Druckexemplar (12) und der farbverbindliche Monitor (14) relativ zueinander verlagerbar, wobei abhängig von der Relativposition zwischen dem Druckexemplar (12) und dem farbverbindlichen Monitor (14) automatisch ein auf dem farbverbindlichen Monitor (14) zu visualisierender Ausschnitt aus dem Softproof bestimmt und angezeigt wird, nämlich derjenige Ausschnitt, der dem Ausschnitt des Druckexemplars (12) entspricht, in dessen Bereich sich der farbverbindliche Monitor befindet.

## Beschreibung

Die Erfindung betrifft ein Softproofsystem einer Druckmaschine nach dem Oberbegriff des Anspruchs 1.

Als farbliche Referenz bei der Ausführung eines Druckauftrags auf einer Druckmaschine, wie z. B. auf einer Rollenrotationsdruckmaschine oder auf einer Bogendruckmaschine, dient nach der Praxis üblicherweise ein auf einem Farbtintenstrahldrucker angefertigtes Referenzmuster, wobei ein Drucker die auf der Druckmaschine gedruckten Druckexemplare mit diesem Referenzmuster an einem Leitstand der Druckmaschine vergleicht. Solche auf einem Farbtintenstrahldrucker geduckten Referenzmuster bezeichnet man auch als Hardproof. Weiterhin ist es bereits bekannt, zusätzlich zu dem oder als Ersatz für das auf dem Farbtintenstrahldrucker angefertigte Hardproof eine farbliche Referenz auf einem farbverbindlichen Monitor eines Leitstands zu visualisieren. Die Visualisierung einer solchen farblichen Referenz auf einem farbverbindlichen Monitor wird auch als. Softproof bezeichnet.

Ein Softproofsystem einer Druckmaschine verfügt über eine Aufnahme zur Ablage eines in einem Druckprozess gedruckten Druckexemplars sowie über einen farbverbindlichen Monitor zur Visualisierung eines als farbliche Referenz dienenden Softproofs, wobei bedingt dadurch, dass der farbverbindliche Monitor aufgrund seiner Abmessungen nicht für das gesamte Druckexemplar die farbliche Referenz anzeigen kann, derselbe nur einen Ausschnitt aus dem Softproof visualisiert. Dabei bereitet insbesondere die einfache Auswahl des auf dem Monitor zu visualisierenden Ausschnitts aus dem Softproof Schwierigkeiten.

Weiterhin bereitet der Vergleich zwischen dem auf dem farbverbindlichen Monitor visualisierten Ausschnitt aus dem Softproof mit dem entsprechenden Ausschnitt des Druckexemplars Schwierigkeiten, insbesondere dann, wenn zwischen dem Monitor und dem Ausschnitt des Druckexemplars, für welches der Monitor den Ausschnitt aus dem Softproof visualisiert, ein räumlicher Abstand besteht.

Hiervon ausgehend liegt der vorliegenden Erfindung das Problem zugrunde ein neuartiges Softproofsystem einer Druckmaschine zu schaffen.

Dieses Problem wird durch ein Softproofsystem gemäß Anspruch 1 gelöst. Erfindungsgemäß sind das Druckexemplar und der farbverbindliche Monitor relativ zueinander verlagerbar, wobei abhängig von der Relativposition zwischen dem Druckexemplar und dem farbverbindlichen Monitor automatisch ein auf dem farbverbindlichen Monitor zu visualisierender Ausschnitt aus dem Softproof bestimmt und angezeigt wird, nämlich derjenige Ausschnitt, der dem Ausschnitt des Druckexemplars entspricht, in dessen Bereich, insbesondere oberhalb dessen, sich der farbverbindliche Monitor befindet.

Beim erfindungsgemäßen Softproofsystem sind das Druckexemplar und der farbverbindliche Monitor relativ zueinander verlagerbar. Abhängig von der Relativposition zwischen dem Druckexemplar und dem farbverbindlichen Monitor wird automatisch der auf dem farbverbindlichen Monitor zu visualisierende Ausschnitt des Softproofs bestimmt, nämlich derjenige Ausschnitt, der dem Ausschnitt des Druckexemplars entspricht, in dessen Bereich sich der farbverbindliche Monitor befindet. Hierdurch wird einerseits die Auswahl des auf dem farbverbindlichen Monitor zu visualisierenden Ausschnitt aus dem Softproof vereinfacht, weiterhin bereitet der Vergleich des visualisierten Ausschnitts aus dem Softproof mit dem entsprechenden Ausschnitt des Druckexemplars keine Schwierigkeiten, da der farbverbindliche Monitor sich stets im Bereich des entsprechenden Ausschnitts des Druck-exemplars befindet.

Vorzugsweise ist der farbverbindliche Monitor relativ zu einem feststehenden Druckexemplar verlagerbar ist, insbesondere rotatorisch sowie entlang von zwei Achsen translatorisch.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung eines erfindungsgemäßen Softproofsystems nach einem ersten Ausführungsbeispiel; und
- Fig. 2:: eine schematisierte Darstellung eines erfindungsgemäßen Softproofsystems nach einem zweiten Ausführungsbeispiel.

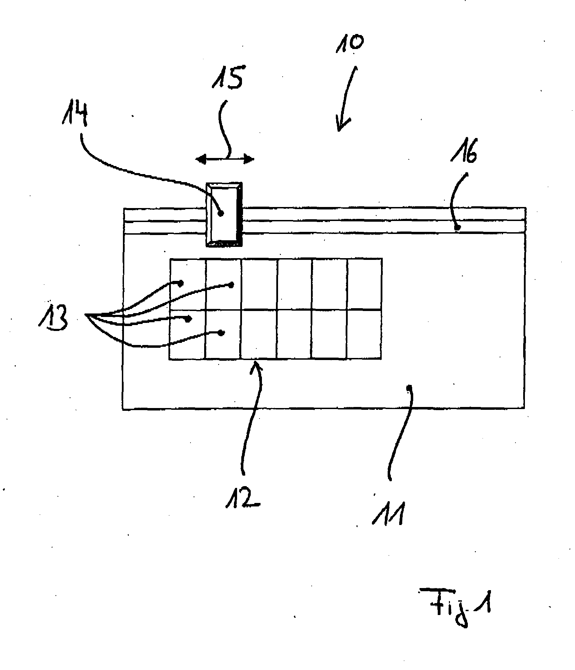

Fig. 1 zeigt stark schematisiert ein Ausführungsbeispiel eines erfindungsgemäßen Softproofsystems 10 einer Druckmaschine. Das Softproofsystem 10 verfügt über eine Aufnahme 11 zur Ablage eines Druckexemplars 12, wobei gemäß Fig. 1 das Druckexemplar 12 insgesamt zwölf stehende Druckseiten 13 umfasst. Die Anzahl von zwölf stehenden Druckseiten ist rein exemplarisch. Weiterhin umfasst das Softproofsystem 10 der Fig. 1 einen farbverbindlichen Monitor 14. Der farbverbindliche Monitor 14 dient der Visualisierung eines als farbliche Referenz für das Druckexemplar 12 dienenden Softproofs, nämlich eines Ausschnitts aus dem Softproof, wobei die Größe des visualisierbaren Ausschnitts aus dem Softproof vom Format des farbverbindlichen Monitors 14 abhängig ist.

Im Ausführungsbeispiel der Fig. 1 ist der farbverbindliche Monitor 14 relativ zu dem auf der Aufnahme 11 abgelegten, ortsfesten bzw. feststehenden Druckexemplar 12 verlagerbar, nämlich entlang einer einzigen Achse in Richtung des Doppelpfeils 15. Der farbverbindliche Monitor 14 ist hierzu entlang einer Traverse 16 in Richtung des Doppelpfeils 15 translatorisch verfahrbar.

Abhängig von der Relativposition zwischen dem Druckexemplar 12 und dem farbverbindlichen Monitor 14 ist automatisch der auf dem Monitor 14 zu visualisierende Ausschnitt aus dem Softproof bestimmbar und auf dem Monitor 14 anzeigbar, nämlich derjenige Ausschnitt aus dem Softproof, der dem Ausschnitt des Druckexemplars 12 entspricht, oberhalb dessen sich der farbverbindliche Monitor 14 befindet.

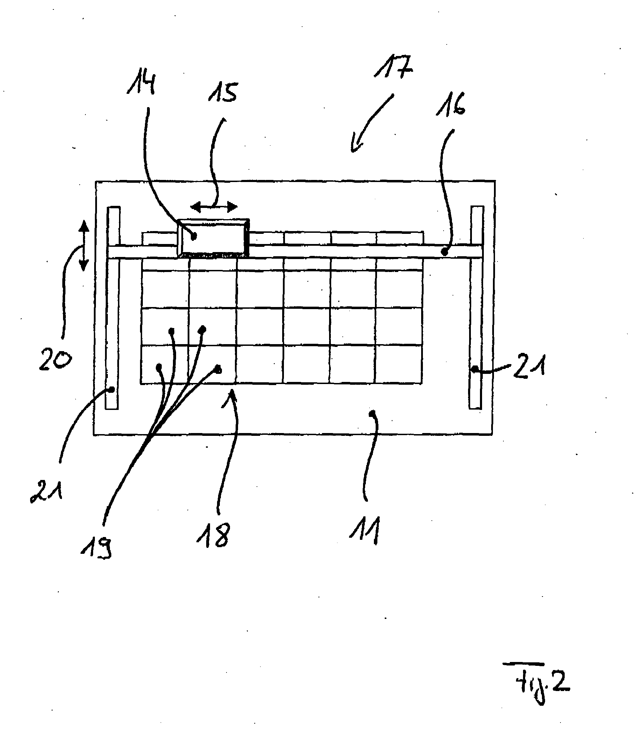

Fig. 2 zeigt ein zweites Ausführungsbeispiel eines erfindungsgemäßen Softproofsystems 17, welches wiederum über eine Aufnahme 11 zur Ablage eines in einem Druckprozess gedruckten Druckexemplar 18 sowie einen farbverbindlichen Monitor 14 zur Visualisierung eines Ausschnitts aus dem Softproof dient. Im gezeigten Ausführungsbeispiel der Fig. 2 umfasst das Druckexemplar 18 insgesamt vierundzwanzig liegend gedruckte Druckseiten 19. Die Anzahl von vierundzwanzig liegenden Druckseiten ist rein exemplarisch.

Auch im Ausführungsbeispiel der Fig. 2 ist der farbverbindliche Monitor 14 relativ zu dem auf der Aufnahme 11 abgelegten, feststehenden und damit ortsfesten Druckexemplar 18 verlagerbar, und zwar gemäß Fig. 2 entlang von senkrecht zueinander verlaufenden Achsen, im Sinne der Doppelpfeile 15, 20, Zur Verlagerung des farbverbindlichen Monitors 14 in Richtung des Doppelpfeils 15 ist derselbe auf einer Traverse 16 translatorisch verfahrbar gelagert. Zur Verlagerung des farbverbindlichen Monitors 14 in Richtung des Doppelpfeils 16 ist derselbe zusammen mit der Traverse 16 entlang von Führungen 21 translatorisch verfahrbar gelagert.

Sowohl im Ausführungsbeispiel der Fig. 1 als auch im Ausführungsbeispiel der Fig. 2 ist der farbverbindliche Monitor 14 nicht nur translatorisch verlagerbar, sondern vorzugsweise auch rotatorisch relativ zum Druckexemplar. Hierdurch kann der Monitor 14 abhängig davon, ob auf demselben ein Ausschnitt aus dem Softproof für eine oder mehrere stehende bzw. liegende Druckseiten zu visualisieren ist, relativ zum Druckexemplar gedreht werden.

Die Verlagerung des farbverbindlichen Monitors 14 relativ zum Druckexemplar kann manuell oder motorisch erfolgen. Bei einer motorischen Verlagerung des Monitors relativ zum Druckexemplar ist derselbe vorzugsweise abhängig von einer programmierbaren Sequenz an verschiedene Positionen relativ zum Druckexemplar verlagerbar, wobei dann für jede dieser Positionen automatisch ein auf dem Monitor 14 zu visualisierender Ausschnitt aus dem Softproof bestimmt und angezeigt wird.

Nach einer vorteilhaften Weiterbildung der hier vorliegenden Erfindung visualisiert der farbverbindliche Monitor 14 abhängig von dessen Relativposition zum Druckexemplar zusätzlich zu dem zu visualisierenden Ausschnitt aus dem Softproof weiterhin Anzeigeelemente eines Colorpults der Druckmaschine, Hierbei handelt es sich insbesondere um Sollwerte und/oder Istwerte einer farbzonenabhängigen Farbdichte und/oder um Sollwerte und/oder Istwerte der Farbzonen.

Im Ausführungsbeispiel der Fig. 1 und 2 ist der farbverbindliche Monitor 14 jeweils relativ zum ortsfesten bzw. feststehenden Druckexemplar 12 bzw. 18 translatorisch sowie vorzugsweise rotatorisch verlagerbar. Im Unterschied hierzu ist es auch möglich, dass der Monitor 14 ausschließlich rotatorisch verlagerbar ist, und dass das Druckexemplar relativ zum farbverbindlichen Monitor entlang einer Achse oder entlang von zwei Achsen translatorisch verlagerbar ist.

Mit Hilfe des erfindungsgemäßen Softproofsystems ist es möglich, einen auf einem Monitor visualisierten Ausschnitt aus einem Softproof leicht mit dem entsprechenden Ausschnitt des Druckexemplars zu vergleichen, da einerseits durch die Relativposition zwischen Monitor und Druckexemplar automatisch der zu visualisierende Ausschnitt aus dem Softproof bestimmt wird und da andererseits sich der Monitor stets im Bereich des entsprechenden Ausschnitts des Druckexemplars, nämlich oberhalb desselben, befindet.

### Bezugszeichenliste

- 10: Softproofsystem
- 11: Aufnahme
- 12: Druckexemplar
- 13: Druckseite
- 14: Monitor
- 15: Doppelpfeil
- 16: Traverse
- 17: Softproofsystem
- 18: Druckexemplar
- 19: Druckseite
- 20: Doppelpfeil
- 21: Führung

## Patentansprüche

1. Softproofsystem einer Druckmaschine, mit einer Aufnahme zur Ablage eines in einem Druckprozess gedruckten Druckexemplars, und mit einem farbverbindlichen Monitor zur Visualisierung eines als farbliche Referenz für das Druckexemplar dienenden Softproof, **dadurch gekennzeichnet, dass** das Druckexemplar (12; 18) und der farbverbindliche Monitor (14) relativ zueinander verlagerbar sind, wobei abhängig von der Relativposition zwischen dem Druckexemplar (12; 18) und dem farbverbindlichen Monitor (14) automatisch ein auf dem farbverbindlichen Monitor (14) zu visualisierender Ausschnitt aus dem Softproof bestimmt und angezeigt wird, nämlich derjenige Ausschnitt, der dem Ausschnitt des Druckexemplars (12; 18) entspricht, in dessen Bereich sich der farbverbindliche Monitor (14) befindet.

2. Softproofsystem nach Anspruch 1, **dadurch gekennzeichnet, dass** das Druckexemplar relativ zu einem feststehenden, farbverbindlichen Monitor verlagerbar ist.

3. Softproofsystem nach Anspruch 1, **dadurch gekennzeichnet, dass** der farbverbindliche Monitor (14) relativ zu einem feststehenden Druckexemplar (12; 18) verlagerbar ist.

4. Softproofsystem nach Anspruch 3, **dadurch gekennzeichnet, dass** der Monitor (14) relativ zu dem Druckexemplar (12) entlang einer einzigen Achse translatorisch verlagerbar ist.

5. Softproofsystem nach Anspruch 3, **dadurch gekennzeichnet, dass** der Monitor (14) relativ zu dem Druckexemplar (18) entlang von mehreren Achsen translatorisch verlagerbar ist.

6. Softproofsystem nach Anspruch 4 oder 5, **dadurch gekennzeichnet, dass** der Monitor (14) relativ zu dem Druckexemplar (12; 18) rotatorisch verlagerbar ist.

7. Softproofsystem nach einem der Anspruche 3 bis 6, **dadurch gekennzeichnet, dass** der Monitor (14) manuell verlagerbar ist.

8. Softproofsystem nach einem der Anspruche 3 bis 6, **dadurch gekennzeichnet, dass** der Monitor (14) motorisch verlagerbar ist.

9. Softproofsystem nach Anspruch 8, **dadurch gekennzeichnet, dass** der Monitor (14) vollautomatisch entsprechenden einer programmierbaren Sequenz an verschiedene Positionen relativ zum Druckexemplar verlagerbar ist, wobei in jeder dieser Positionen automatisch ein auf dem farbverbindlichen Monitor zu visualisierender Ausschnitt aus dem Softproof bestimmt und angezeigt wird.

10. Softproofsystem nach einem der Ansprüche 1 bis 9, **dadurch gekennzeichnet, dass** der farbverbindliche Monitor (14) abhängig von der Relativposition zwischen dem Druckexemplar (12; 18) und dem farbverbindlichen Monitor (14) zusätzlich zu dem zu visualisierenden Ausschnitt aus dem Softproof weiterhin Anzeigeelemente eines Colorpults der Druckmaschine, insbesondere Sollwerte und/oder Istwert einer farbzonenabhängigen Farbdichte und/oder Sollwerte und/oder Istwerte der Farbzonen, visualisiert.
